(19) Europäisches Patentamt
European Patent Office
Office européen des brevets

(11) EP 1 477 505 A1

(12) # EUROPEAN PATENT APPLICATION

published in accordance with Art. 158(3) EPC

(43) Date of publication:
**17.11.2004 Bulletin 2004/47**

(21) Application number: **03703082.2**

(22) Date of filing: **30.01.2003**

(51) Int Cl.[7]: **C08G 63/16**, C08G 18/42

(86) International application number:
**PCT/JP2003/000874**

(87) International publication number:
**WO 2003/064497 (07.08.2003 Gazette 2003/32)**

(84) Designated Contracting States:
**AT BE BG CH CY CZ DE DK EE ES FI FR GB GR HU IE IT LI LU MC NL PT SE SI SK TR**
Designated Extension States:
**AL LT LV MK RO**

(30) Priority: **30.01.2002 JP 2002021107**

(71) Applicant: **Kyowa Hakko Chemical Co., Ltd.**
**Tokyo 103-0022 (JP)**

(72) Inventors:
- **MURAYAMA, Toshikazu Kyowa Yuka Co., Ltd. Yokkaichi-shi, Mie 510-8502 (JP)**
- **NAKANO, Yoshio Kyowa Yuka Co., Ltd. Yokkaichi-shi, Mie 510-8502 (JP)**
- **MURATA, Shigeru Kyowa Yuka Co., Ltd. Yokkaichi-shi, Mie 510-8502 (JP)**

(74) Representative: **Casalonga, Axel**
**Bureau D.A. Casalonga - Josse,**
**Paul-Heyse-Strasse 33**
**80336 München (DE)**

(54) **POLYESTER**

(57) The present invention provides a polyester and a polyurethane each having, in the molecule, a structural unit represented by formula (I):

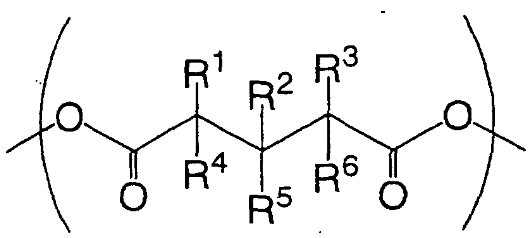

(I)

(wherein, $R^1$, $R^2$, $R^3$, $R^4$, $R^5$ and $R^6$, which are the same or different, each represent a hydrogen atom or lower alkyl, provided that at least one of $R^1$, $R^2$, $R^3$, $R^4$, $R^5$ and $R^6$ is lower alkyl), and being excellent in hydrolysis resistance.

EP 1 477 505 A1

## Description

Technical Field

The present invention relates to polyesters useful for applications such as various molding materials, biodegradable materials, paints, adhesives, raw materials for polyurethanes, polyester elastomers, polymerizable oligomers, etc., curing agents of epoxy resins, or the like. The present invention also relates to polyurethanes useful for applications such as various molding materials, biodegradable materials, paints, adhesives, artificial leather, or the like.

Background Art

Polyesters are useful for applications such as various molding materials, biodegradable materials, paints, adhesives, raw materials for polyurethanes, polyester elastomers, polymerizable oligomers, etc., curing agents of epoxy resins, or the like. However, conventionally known polyesters produced from an adipic acid or the like tend to undergo hydrolysis, and there is a demand for polyesters excellent in hydrolysis resistance.

Whereas, polyurethanes produced from a polyester polyol, which are useful for applications such as various molding materials, biodegradable materials, paints, adhesives, artificial leather, or the like, also similarly tend to undergo hydrolysis, and there is a demand for polyurethanes excellent in hydrolysis resistance.

Disclosure of the present invention

An object of the present invention is to provide polyesters and polyurethanes excellent in hydrolysis resistance.

The present invention provides the following [1] to [11]:

[1] A polyester having, in the molecule, a structural unit represented by formula (I):

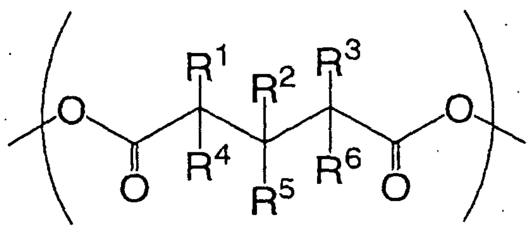

(I)

(wherein $R^1$, $R^2$, $R^3$, $R^4$, $R^5$ and $R^6$, which are the same or different, each represent a hydrogen atom or lower alkyl, provided that at least one of $R^1$, $R^2$, $R^3$, $R^4$, $R^5$ and $R^6$ is lower alkyl.)

[2] The polyester according to [1], wherein $R^1$ and $R^3$, which are the same or different, each are lower alkyl; and $R^2$, $R^4$, $R^5$ and $R^6$ are hydrogen atoms).

[3] The polyester according to [1], wherein $R^1$ and $R^3$ are both ethyl; and $R^2$, $R^4$, $R^5$ and $R^6$ are hydrogen atoms.

[4] The polyester according to any of [1] to [3], wherein the number-average molecular weight of the polyester is within a range of 300 to 1,000,000.

[5] The polyester according to any of [1] to [4], which has a hydroxyl group or a carboxyl group at its end.

[6] A method for producing a polyurethane having a structural unit represented by formula (I):

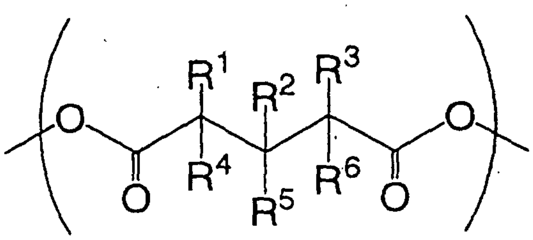

(I)

(wherein $R^1$, $R^2$, $R^3$, $R^4$, $R^5$ and $R^6$ have the same meanings as defined above, respectively), which comprises: allowing a polyester having in the molecule a structural unit represented by formula (I):

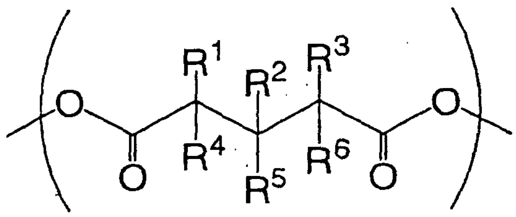

(I)

(wherein $R^1$, $R^2$, $R^3$, $R^4$, $R^5$ and $R^6$ have the same meanings as defined above, respectively), and having at its both ends hydroxyl groups to react with an isocyanate compound at 50 to 150°C.

[7] A polyurethane having, in the molecule, a structural unit represented by formula (I):

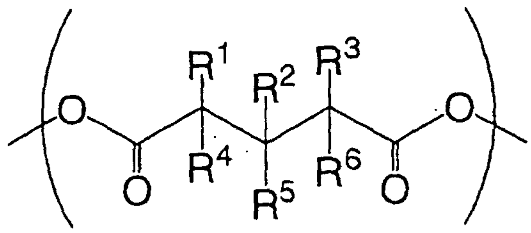

(I)

(wherein $R^1$, $R^2$, $R^3$, $R^4$, $R^5$ and $R^6$ have the same meaning as defined above, respectively).

[8] The polyurethane according to [7], wherein $R^1$ and $R^3$, which are the same or different, are lower alkyl; and $R^2$, $R^4$, $R^5$ and $R^6$ are both hydrogen atoms.

[9] The polyurethane according to [7], wherein $R^1$ and $R^3$ are both ethyl, and $R^2$, $R^4$, $R^5$ and $R^6$ are hydrogen atoms.

[10] The polyurethane according to any of [7] to [9], wherein the weight-average molecular weight of the polyurethane is within a range of 10,000 to 3,000,000.

[11] The polyester according to any of [1] to [4], which has a polymerizable double bond at its end.

The present invention will be described below in details.

In the definition of the group in formula (I), the lower alkyl includes a straight-chain or branched alkyl group having 1 to 6 carbon atoms, such as methyl, ethyl, propyl, isopropyl, butyl, isobutyl, s-butyl, t-butyl, pentyl, isopentyl, neopentyl and hexyl. Preferred alkyl are those having 1 to 3 carbon atoms (methyl, ethyl, propyl, and isopropyl), and ethyl is more preferred.

As the polyester of the present invention, preferred is the one having a structural unit represented by formula (I) wherein $R^1$ and $R^3$, which are the same or different, are lower alkyl, and $R^2$, $R^4$, $R^5$ and $R^6$ each are hydrogen atoms, and more preferred is the one having a structural unit represented by formula (I) wherein $R^1$ and $R^3$ are ethyl, and $R^2$, or $R^5$, and $R^6$ are hydrogen atoms.

The polyester of the present invention is obtainable by subjecting a dicarboxylic acid component containing a branched glutaric acid corresponding to the structural unit represented by formula (I) and diol to a polycondensation reaction in accordance with known methods (the methods described in WO98/41578, JP-A-9-255767, and the like). Alternatively, polycondensation may also be carried out while performing dealcoholization using a dicarboxylic acid diester (such as dimethyl ester or diethyl ester), or the like in place of the dicarboxylic acid component. Further, the polyester of the present invention is also obtainable in the following manner. In accordance with known methods [SHIN KOUBUNSHI JIKKENGAKU, Vol. 3, KOUBUNSHI NO GOUSEI / HANNOU (2), edited by the Society of Polymer Science, Japan, KYORITSU SHUPPAN (1996), pages 81 to 83, and the like], the dicarboxylic acid component is allowed to react with excess diol to synthesize a compound having hydroxyl groups at its both ends, and then by subjecting the compound to polycondensation while distilling away diol.

A catalyst may be used in the polycondensation reactions. Examples of the catalyst include oxides and chlorides of metals such as potassium, sodium, magnesium, vanadium, calcium, zinc, cobalt, manganese, tin, tungsten, germanium, titanium, antimony, aluminum, hafnium, and iron, alkyl titanates such as titanium tetrabutoxide, and titanium tetraisopropoxide, tin compounds such as tin 2-ethylhexanoate and tin dibutyl dilaurate, boron fluoride, phosphorus fluoride, tin fluoride, and substituted borate such as phenyl borate and 3,5-bis(trifluoromethyl)phenyl borate, phosphoric acid, phosphorus acid, and hypophosphorous acid, or salts thereof (such as metal salts of potassium, sodium, magnesium, vanadium, calcium, zinc, cobalt, manganese, tin, tungsten, germanium, titanium, antimony, and the like, and ammonium salts thereof), or esters thereof (such as ethyl ester, isopropyl ester, butyl ester, hexyl ester, isodecyl ester,

octadecyl ester, decyl ester, stearyl ester, and phenyl ester). The catalyst is preferably used in an amount of 0.0001 to 3 wt% based on the amount of the raw material for the polyester of the present invention.

The branched glutaric acid which is a raw material for the polyester of the present invention means a glutaric acid having one or a plurality of lower alkyl side chains. Specific preferred examples thereof may include 2,4-dialkyl glutarate, 3-alkyl glutarate, and 2,3-dialkyl glutarate, among which, 2 ,4-diethyl glutarate is more preferred. The branched glutaric acids are used alone, or in mixture of two or more thereof.

The branched glutaric acid can be produced from the corresponding diol in accordance with the known methods [YUKAGAKU (J. Japan, Oil Chem. Soc.), Vol. 19, No. 12, page 1087 (1970), JP-A-6-72948, and the like].

The dicarboxylic acid component as a raw material for the polyester of the present invention may contain a dicarboxylic acid other than a branched glutaric acid. When a dicarboxylic acid other than a branched glutaric acid is used in combination, the amount of the branched glutaric acid to be used is preferably 20 mol% or more, and more preferably 30 mol% or more based on the total amount of dicarboxylic acids to be used. When the amount of the branched glutaric acid to be used is 20 mol% or more, the hydrolysis resistance of the resulting polyester is more excellent, and further, the solubility in an organic solvent of the polyester is more excellent.

The dicarboxylic acids other than a branched glutaric acid have no particular restriction so long as they are compounds each having two carboxylic groups, and mention may be preferably made of dicarboxylic acids having 3 to 22 carbon atoms. Specific preferred examples thereof may include aliphatic dicarboxylic acids such as malonic acid, dimethylmalonic acid, succinic acid, glutaric acid, adipic acid, 2-methyladipic acid, 2,5-diethyladipic acid, trimethyladipic acid, 2,2,5,5-teteramethyladipic acid, pimelic acid, 3,3-diethylsuccinic acid, azelaic acid, sebacic acid, and suberic acid, and alicyclic dicarboxylic acids such as 1,3-cyclopentanedicarboxylic acid, 1,4-cyclohexanedicarboxylic acid, and tricyclodecane dicarboxylic acid, and aromatic dicarboxylic acids such as isophthalic acid, 2,6-naphthalenedicarboxylic acid, 2,7-naphthalenedicarboxylic acid, 1,4-naphthalenedicarboxylic acid, 1,4-phenylenedioxydiacetic acid, 1,3- phenylenedioxydiacetic acid, diphenic acid, dibenzoic acid, 4,4'-oxydibenzoic acid, diphenylmethane-4,4'-dicarboxylic acid, diphenysulfone-4,4'-dicarboxylic acid, and 4,4'-biphenyldicarboxylic acid. The dicarboxylic acids are used alone, or in mixture of two or more thereof.

As the raw material for the polyester of the present invention, a carboxylic acid having three or more carboxyl groups such as trimellitic acid, trimesic acid, or pyromellitic acid may also be used in an amount in the range capable of melt molding of the resulting polyester.

The diol as the raw material for the polyester of the present invention has no particular restriction so long as it is a compound having two hydroxyl groups. Examples thereof include diols such as ethylene glycol, diethylene glycol, triethylene glycol, tetraethylene glycol, propylene glycol, dipropylene glycol, tripropylene glycol, 1,3-propanediol, 1,3-butanediol, 1,4-butanediol, 2,3-butanediol, 2-methyl-1,2-propanediol, 2-methyl-1, 3-propanediol, 1,2-pentanediol, 1,3-pentanediol, 1,4-pentanediol, 1,5-pentanediol, 1,2-hexanediol, 1,5-hexanediol, 1,6-hexanediol, 2,5-hexanediol, 2-methyl-2,4-pentanediol, 2,3-dimethyl-2,3-butanediol, 1,7-heptanediol, 2-ethyl-1,3-hexanediol, 2,4-dimethyl-2,4-pentanediol, 1,2-octanediol, 1,8-octanediol, 2,5-dimethyl-2,5-hexanediol, 1,9-nonanediol, 2-methyl-1,8-octanediol, 2,4,4-trimethyl-1,6-hexanediol, 1,10-decanediol, 5-methyl-1,9-nonanediol, 1,12-dodecanediol, neopentyl glycol, 2-ethyl-2-methyl-1,3-propanediol, 2-isopropyl-2-methyl-1,3-propanediol, 2,2-diethyl-1,3-propanediol, 2-butyl-2-ethyl-1,3-propanediol, 3-methyl-1,5-pentanediol, 2,4-diethyl-1,5-pentanediol, cyclohexanedimethanol, tricyclodecane dimethanol, and xylylenediol. The diols are used alone, or in mixture of two or more thereof.

As the raw material for the polyester of the present invention, an alcohol having three or more hydroxyl groups such as trimethylolpropane and pentaerythritol may be used in an amount in the range capable of melt molding of the resulting polyester.

The ratio between the number of moles of the hydroxyl groups and the number of moles of the carboxyl groups in the raw material is preferably 0.5 : 1 to 2.5 : 1, and more preferably 0.6 : 1 to 2 : 1. When the number of moles of the hydroxyl groups is equal to, or larger than the number of moles of the carboxyl groups, polyesters each having hydroxyl groups at its both ends are obtained in a larger proportion. When the number of moles of the carboxyl groups is equal to, or larger than the number of moles of the hydroxyl groups, polyesters each having carboxyl groups at its both ends are obtained in a larger proportion.

The polycondensation reaction is carried out preferably at 50 to 280°C, and more preferably at 100 to 250°C, if required, under reduced pressure.

The number-average molecular weight of the polyester of the present invention is preferably 300 to 1,000,000, and more preferably 500 to 200,000.

To the polyester of the present invention, additives such as stabilizer, coloring agent, ultraviolet absorber, light stabilizer, antioxidant, antistatic agent, flame retarder, glass fiber, plasticizer, and lubricant may be added according to various intended purposes. The amount of the additives to be used is preferably 0.001 to 5 wt% based on the amount of the polyester of the present invention.

The polyester of the present invention can be molded by, for example, injection molding, blow molding, extrusion molding, compression molding, drawing,or vacuum molding. Further, the polyester of the present invention can

also be processed by being dissolved in an organic solvent (a ketone compound such as acetone or methyl ethyl ketone, dimethylformamide, tetrahydrofuran, chloroform, or the like).

The polyester of the present invention can be formed in molded products in various forms, and it can also be molded in, for example, a sheet, a film, or a fiber according to the known method (Plastic Kakougijutsu Binran, (Plastic Processing Technology Guide), Japan Industrial Journal Co., Ltd., 1969, or the like).

The polyester of the present invention is useful for applications such as various molding materials, biodegradable materials, paints, adhesives, and raw materials for a polyurethane, a polyester elastomer, and a polymerizable oligomer, and curing agents of epoxy resins.

The polyester of the present invention is high in solubility in an organic solvent (as the organic solvent, mention may be made of each of the aforesaid organic solvents, or the like).

The polyester of the present invention is excellent in hydrolysis resistance, alkali resistance, acid resistance, weather resistance, and the like.

The product prepared by depolymerizing the polyester of the present invention to monomers by long-time hydrolysis is also excellent in biodegradability, and hence the polyester of the present invention is also useful as a biodegradable polymer.

The polyurethane of the present invention can be produced by allowing a polyester having the structural unit represented by formula(I) and having hydroxyl groups at its both ends to react with an isocyanate compound preferably at 50 to 150°C according to the known method (WO 96/9334, and the like). The polyester herein used preferably has a number-average molecular weight of 300 to 5,000.

Further, a chain extender may be added, if required, to the raw material for the polyurethane. As the chain extender, mention may be made of a compound having two or more amino groups such as propylene diamine or isophorone diamine, a compound having two or more hydroxyl groups such as ethylene glycol, propylene glycol, or 1,4-butanediol, and the like. It is preferably used in an amount of 0.5 to 10 wt% based on the total amount of the raw material for the polyurethane.

The isocyanate compound is preferably a compound having two or more isocyanate groups. Specific examples thereof may include 4,4'-diphenylmethane diisocyanate, tolylenediisocyanate, isophoronediisocyanate, and hexamethylenediisocyanate. The isocyanate compound is preferably used such that the ratio of the number of isocyanate groups to the number of the hydroxyl groups in the whole raw materials for the polyurethane is 0.9 to 1.2.

The weight-average molecular weight of the polyurethane of the present invention is preferably 10,000 to 3,000,000, and more preferably 50,000 to 1,000,000.

The polyurethane of the present invention is excellent in hydrolysis resistance, alkali resistance, acid resistance, weather resistance, and the like, and is useful for applications such as various molding materials, biodegradable materials, paints, adhesives, and artificial leather.

Then, a polyester of the present invention having a polymerizable double bond at its end will be described.

The polyester of the present invention having a polymerizable double bond (herein, the group having a polymerizable double bond is preferably a vinyl group) at its end can be produced: (1) by allowing a polyester having the structural unit represented by the formula (I) hydroxyl groups at its both ends(hereinafter, referred to as Polymer A), to react with a compound having a polymerizable double bond and a carboxyl group or with an ester thereof; (2) by allowing Polymer A to react with a compound having a polymerizable double bond and an isocyanate group; (3) by allowing Polymer A to react with multifunctional isocyanate to thereby change the end to an isocyanate group, and allowing the isocyanate-terminated Polymer A to react with a compound having a polymerizable double bond and a hydroxyl group; (4) by allowing Polymer A to react with the product inwhich the end has been changed to an isocyanate group by allowing multifunctional isocyanate and a compound having a polymerizable double bond and a hydroxyl group to react with each other; (5) by allowing a polyester having the structural unit represented by the formula (I) carboxyl groups at its both ends (hereinafter, referred to as Polymer B) to react with a compound having a polymerizable double bond and a hydroxyl group; or (6) by allowing Polymer B to react with a chloride such as thionyl chloride to thereby change the end to into an acid chloride, and then, allowing it to react with a compound having a polymerizable double bond and a hydroxyl group, or by other process.

The polyester having the structural unit represented by formula (I) herein used preferably has a number-average molecular weight of 300 to 10,000.

The compound having a polymerizable double bond and a carboxyl group or an ester thereof herein used has no particular restriction. Examples thereof include acrylic acid, methacrylic acid, methyl acrylate, ethyl acrylate, propyl acrylate, isopropyl acrylate, methyl methacrylate, ethyl methacrylate, propylmethacrylate, isopropylmethacrylate, and 2-acryloyloxyethyl succinate, and mixtures thereof.

The compound having a polymerizable double bond and an isocyanate group has no particular restriction. Examples thereof include 2-methacryloyloxy ethyl isocyanate.

The multifunctional isocyanate has no particular restriction. Examples thereof include tolylene diisocyanate, 4,4'-diphenylmethane diisocyanate, hexamethylene diisocyanate, isophorone diisocyanate, cyclohexane diisocyanate,

lysine triisocyanate, lysine diisocyanate, m- or p-phenylene diisocyanate, 1,5-naphthalene diisocyanate, and xylylene diisocyanate, and mixtures thereof.

The compound having a polymerizable double bond and a hydroxyl group has no particular restriction. Examples thereof include 2-hydroxyethyl acrylate,2-hydroxyethyl methacrylate, 2-hydroxypropyl acrylate, 2-hydroxypropyl methacrylate, 2-hydroxybutyl acrylate, 2-hydroxybutyl methacrylate, polyethylene glycol acrylate, polyethylene glycol methacrylate, polypropylene glycol acrylate, polypropylene glycol methacrylate, and 2-hydroxy-3-phenoxypropyl acrylate.

In the reaction of a hydroxyl group and a carboxylic group or an ester, it is possible to use the above-mentioned conditions for producing the polyester of the present invention. However, in order to avoid the polymerization, it is preferable to carry out the reaction in a short time at a low temperature of 150°C or less, and preferably 120°C or less, and it is also preferable to use a catalyst and a polymerization inhibitor. If required, an organic solvent may also be used. As the catalyst, the above-mentioned catalysts for the polycondensation reaction are usable. Examples of the polymerization inhibitor may include, hydroquinone, hydroquinone monomethyl ether, hydroquinone monobenzyl ether, hydroquinone monopentyl ether, t-butyl catechol and phenothiazine.

In the reaction of a hydroxyl group and an isocyanate group, it is possible to use the above-described conditions for producing the polyurethane of the present invention. However, in order to avoid the polymerization, it is preferable to carry out the reaction in a short time at a low temperature of 150°C or less. If required, it is possible to use a known urethanization catalyst including a metal salt such as tin octylate or dibutyltin dilaurate, a tertiary amine such as triethylenediamine, or the like, and the above-described polymerization inhibitor.

The reaction in which Polymer B is allowed to react with a chloride such as thionyl chloride to thereby convert into an acid chloride can be carried out in accordance with a known method [4th ed., JIKKEN KAGAKU KOZA 22 (Courses in Experimental Chemistry) edited by the Chemical Society of Japan, Maruzen (1992), pages 115 to 127, andthe like). Inthis step, if required, it is also possible to use a catalyst such as pyridine or hexamethylphosphoric acid triamide.

The polyester of the present invention having a polymerizable double bond at its end is usable as an oligomer for ultraviolet or electron beam curing, or the like, and useful for applications such as a coating material, a photoresist, and a solder resist.

Best Mode for Carrying Out the Present Invention

The present invention will be described below in more detail by refferring to Examples.

The acid value and the hydroxyl value of each polyester shown in Examples were measured in the following manner. Measuring method of acid value: 1 to 3 g of a sample was accurately weighed into a 300-ml Erlenmeyer flask, and dissolved in 50 ml of ethanol. Then, the solution was subjected to neutralization titration with a 0.1 mol/L ethanol solution of potassiumhydroxide using phenolphthalein as an indicator. The acid value was determined by the following equation:

$$\text{Acid value (mgKOH/g)} = X(\text{ml}) \times 0.1 \times 56.1/Y(\text{g})$$

X: Titration amount of 0.5mol/L ethanol solution of potassium hydroxide
Y: Weight of sample

Measuring method of hydroxyl value: 1 to 3 g of a sample was accurately weighed into a 300-ml Erlenmeyer flask, to which 10 ml of a pyridine solution of acetic anhydride (9.8 wt%) was added and heated at 100°C for 1 hour. After heating, to the sample, 10 ml of water and 10 ml of pyridine were added and heated at 100°C for 10 minutes. After cooling of the sample, 10 ml of butanol was added, 'and the solution was subjected to neutralization titration with a 0.5 mol/L ethanol solution of potassium hydroxide using a mixed solution of cresol red and thymol blue (weight ratio 1:3) as an indicator. As the blank test, the same operation was carried out in the same manner as described above, except that the sample was not placed therein, and the titration amount of the 0.5 mol/L ethanol solution of potassium hydroxide required for the neutralization was taken as the titration amount. The hydroxyl value was determined by the following equation:

$$\text{Hydroxyl value (mgKOH/g)} = \{X(\text{ml})-Y(\text{ml})\}$$

$$\times 0.5 \times 56.1/Z\ (\text{g})$$

X: Titration amount in the blank test
Y: Titration amount in the case where a sample has been placed
Z: Weight of the sample

Reference Example 1 Synthesis of 2,4-diethylglutaric acid

160.3g of 2,4-diethyl-1,5-pentanediol (trade name: KYOWADIOL PD-9, manufactured by KYOWA HAKKO KOGYO Co., Ltd., purity 93.9%), 156.6 g of potassium hydroxide (purity 86 %), and 102.2 g of a paraffin mixture having 12 carbon atoms (trade name: KYOWASOL C1200-H, manufactured by KYOWA HAKKO KOGYO Co., Ltd.) were charged into a 1-L autoclave made of nickel and equipped with a reflux condenser, a pressure control valve, and an electrothermic furnace capable of temperature control, and heated with stirring under 1 MPa. The resulting hydrogen gas was determined by means of a gas meter to follow the proceeding of the reaction. The generation of the gas was observed from the vicinity of 230°C. The reaction was further continued with the temperature kept at 250 to 270°C. 89.4 L of hydrogen was generated until 3.5 hours later after the temperature had reached 250°C. The reaction was further continued for 30 minutes, during which a hydrogen gas coincided in an amount of 0.8 L. The amount of hydrogen generated was in accordance with the theoretical amount, and the rate of reaction was 100 %. After the reaction, a reaction solution containing 2,4-diethylglutarate dipotassium was dissolved inwater, and sulfuric acidwas further added thereto to, thereby obtain crude 2, 4-diethylglutaric acid. The crude 2,4-diethylglutaric acid was washed with water, crystallized with n-hexane, and filtrated. Then, 142.5 g of 2,4-diethylglutaric acid (white crystal) was obtained. The purity of the obtained 2,4-diethylglutaric acid was 98.3 % (calculated from the acid value (yield 79.1 %).

Example 1 Synthesis of polyester (polyester polyol) having hydroxyl groups at its both ends using 2,4-diethylglutaric acid and 2,4-diethyl-1,5-pentanediol as raw materials

Into a flask, 5.0 mol (941 g) of 2,4-diethylglutaric acid and 8.0 mol (1282 g) of 2,4-diethyl-1,5-pentanediol were charged, and mixed with stirring at 200 to 220°C under a nitrogen atmosphere. While removing the formed water, the pressure was gradually reduced at the point when the acid value became 5 mgKOH/g or less, and finally set to 0.4 to 0.65 kPa. Further, at the point when the acid value became 1.0 mgKOH/g or less, and the hydroxyl value became 55.0 mgKOH/g with the temperature set at 220°C, stirring was stopped, and the solution was recovered into a container. Then, the solution was cooled down to room temperature to obtain an objective polyester polyol. The polyester finally obtained had an acid value of 0.9 mgKOH/g, and a number-average molecular weight of about 2,000.

Example 2 Synthesis of polyester having carboxyl groups at its both ends using 2,4-diethylglutaric acid and 2,4-diethyl-1,5-pentanediol as raw materials

Into a flask, 3.0 mol (565 g) of 2,4-diethylglutaric acid and 2.0 mol (321 g) of 2,4-diethyl-1,5-pentanediol were charged, andmixedwith stirring at 200 to 220°C under a nitrogen atmosphere. While removing the formed water, the reaction was allowed to proceed. At the point when the acid value became 139. 5 mgKOH/g, the reaction was terminated. The polyester finally obtained had an acid value of 139.5 mgKOH/g, and a number-average molecular weight of about 800.

Example 3 Synthesis of polyester (polyester polyol) having hydroxyl groups at its both ends using 2,4-diethylglutaric acid and 2,4-diethyl-1,5-pentanediol as raw materials

Into a flask, 5.0 mol (941 g) of 2, 4-diethylglutaric acid and 8.0 mol (1282 g) of 2,4-diethyl-1,5-pentanediol were charged, and mixed with stirring at 2 00 to 220°C under a nitrogen atmosphere. While removing the formed water, titanium tetrabutoxide was added in an amount of 0.1 wt% as a catalyst at the point when the acid value was 5 mgKOH/g or less, and then the pressure was gradually reduced, and finally set to 0.13 to 0.013 kPa. Further, at the point when the hydroxyl value became 23.2 mgKOH/g with the temperature set at 240°C, stirring was stopped, and the solution was recovered into a container. Then, the solution was cooled down to room temperature to obtain an objective polyester. The polyester obtained had a weight-average molecular weight of 12,000, and a number-average molecular weight of about 5,000.

The number-average molecular weights and the weight-average molecular weights of polyester and polyurethane were measured by means of gel permeation chromatography under the following analysis conditions.

(Molecular weight measuring method)

Column: TSKgel Super HM-H and TSKgel Super HM-M (two columns) [both manufactured by TOSOH CORPORATION Ltd. ] were connected in series to be used.
Mobile phase: Tetrahydrofuran Flow rate: 0.5 ml/min
Internal reference material: Polystyrene
Column temperature: 40°C

Comparative Example 1 Synthesis of polyester (polyester polyol) having hydroxyl groups at its both ends using adipic acid and 2,4-diethyl-1,5-pentanediol as raw materials

Into a flask, 5.0 mol (730 g) of adipic acid and 7.5 mol (1202 g) of 2,4-diethyl-1,5-pentanediol were charged, and mixed with stirring at 200 to 220°C under a nitrogen atmosphere. While removing the formed water, the pressure was gradually reduced at the point when the acid value became 5 mgKOH/g or less, and finally set to 0.4 to 0.65 kPa. Further, at the point when the acid value became 0.2 mgKOH/g or less and the hydroxyl value became 56.0 mgKOH/g with the temperature set at 220°C, stirring was stopped, and the solution was recovered into a container. Then, the solution was cooled down to room temperature to obtain an objective polyester. The polyester finally obtained had an acid value of 0.2 mgKOH/g and had a number-average molecular weight of about 2,000.

Comparative Example 2 Synthesis of polyester having carboxyl groups at its both ends using adipic acid and 2,4-diethyl-1,5-pentanediol as raw materials

Into a flask, 3.0 mol (438 g) of adipic acid and 2.0 mol (321 g) of 2,4-diethyl-1,5-pentanediol were charged, and mixed with stirring at 200 to 220°C under a nitrogen atmosphere. While removing the formed water, the reaction was allowed to proceed, and the reaction was terminated at the point when the acid value became 169.0 KOH/g. The polyester finally obtained had an acid value of 169.0 mgKOH/g and had a number-average molecular weight of about 800.

Test Example 1

Two gram each of polyester obtained in Examples 1 and 2 and Comparative Examples 1 and 2 was charged in a closed container together with 5 g of distilled water, and allowed to stand in a 100°C constant temperature storage for a prescribed period. After a test, about 100 ml of tetrahydrofuran was added thereto, resulting in a uniform solution. The acid value measurement of the sample was carried out to examine the changes before and after the test. The results are shown in Table-1.

Table 1: Hydrolysis resistance test

(changes in acid value[mgKOH/g])

| Test sample / Test period | Example 1 | Example 2 | Comparative Example 1 | Comparative Example 2 |
|---|---|---|---|---|
| Before test | 0.9 | 139.5 | 0.2 | 169.0 |
| 1 week | 1.1 | 150.0 | 2.2 | 280.0 |
| 2 week | 1.2 | 167.0 | 24.0 | 303.0 |

Table-1 indicates that the polyester of the present invention shows a less increase in acid value, and is excellent in hydrolysis resistance.

Example 4 and Comparative Example 3 Synthesis of polyurethane

The polyester obtained in Example 1 or Comparative Example 1 was mixed with 1,4-butanediol, and heated to 120°C. Into the mixed solution, 4,4'-diphenylmethane diisocyanate which had been previously heated to 120°C in

a separate container was mixed, and melt polymerization was carried out at 120°C for about 3 minutes. The resulting polymerized product was aged at 80°C for 3 days to thereby synthesize the objective polyurethane. The amount of the raw material charged and the weight-average molecular weight are shown in Table 2.

Test Example 2

Two gram each of polyurethane obtained in Example 4 and Comparative Example 3 was charged in a closed container together with 5 g of distilled water, and allowed to stand in a 100°C constant temperature storage for a prescribed period. After a test, polyurethane was taken out from the container, and the weight-average molecular weight measurement (measurement under the foregoing analysis conditions) was carried out to examine the changes before and after the test. The results are shown in Table 2.

Table 2:

| Hydrolysis resistance test (changes in weight-average molecular weight) | | | | |
|---|---|---|---|---|
| | | | Example 4 | Comparative Example 3 |
| Raw material for polyurethane and weight-average molecular weight in ( ): Charging amount [parts by weight] | Polyester polyol | | Polyester produced in Example 1 (178.2) | Polyester produced in Comparative Example 1 (179.8) |
| | Chain externder | | 1,4-Butanediol (26.2) | Same as the left (25.8) |
| | Diisocyanate | | 4,4'-Diphenyl methane diisocyanate (95.6) | Same as the left (94.3) |
| | Weight-average molecular weight | | 81,000 | 92,000 |
| Weight-average molecular weight after hydrolysis resistance test | Test period | 1 week | 79,000 | 61,000 |
| | | 2 weeks | 78,000 | 29,000 |

Table 2 indicates that the polyurethane of the present invention shows a less reduction in weight-average molecular weight after the test, and is excellent in hydrolysis resistance.

Example 5 Synthesis of polyester having polymerizable double bond at its ends

Into a flask, 5.0 mol (941 g) of 2,4-diethylglutaric acid and 7.5 mol (1202 g) of 2,4-diethyl-1,5-pentanediol were charged, and mixed with stirring at 200 to 220°C under a nitrogen atmosphere. While removing the formed water, the pressure was gradually reduced at the point when the acid value became 5 mgKOH/g or less, and finally set to 0.4 to 0.65 kPa. Further, at the point when the acid value became 1.0 mgKOH/g or less, and the hydroxyl value became 108.3 mgKOH/g with the temperature set at 220°C, stirring was stopped, and the solution was recovered into a container. Then, the solution was cooled down to room temperature to obtain polyester having hydroxyl groups at its both ends. The polyester finally obtained had an acid value of 0.6 mgKOH/g, and a number-average molecular weight of about 1,030. 0.39 mol (403 g) of the obtained polyester having hydroxyl groups at its both ends, 0.56 mol (98 g) of 2, 4-tolylene diisocyanate, 0.3 g (0.06 wt%) of hydroquinone monomethyl ether, and 0.13 g (0.02 wt%) of tin octylate were charged into a flask, and allowed to react under a nitrogen flow at the maximum reaction temperature of 80°C for about 4 hours. Then, 0.32 mol (37 g) of 2-hydroxyethyl acrylate was added thereto, and the resulting mixture was allowed to react at the maximum reaction temperature of 66°C for about 3 hours. There were almost no remaining isocyanate groups, and an objective polyester having a polymerizable double bond at its ends was obtained. The polyester obtained had a weight-average molecular weight of 6,275 and a number-average molecular weight of 3,260.

Industrial Applicability

The present invention provides a polyester and a polyurethane which are excellent in hydrolysis resistance.

## Claims

1. A polyester having, in the molecule, a structural unit represented by formula (I):

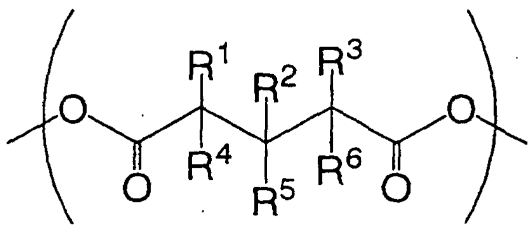

(I)

(wherein $R^1$, $R^2$, $R^3$, $R^4$, $R^5$ and $R^6$, which are the same or different, each represent a hydrogen atom or lower alkyl, provided that at least one of $R^1$, $R^2$, $R^3$, $R^4$, $R^5$ and $R^6$ is lower alkyl.)

2. The polyester according to claim 1, wherein $R^1$ and $R^3$, which are the same or different, each are lower alkyl; and $R^2$, $R^4$, $R^5$ and $R^6$ are hydrogen atoms).

3. The polyester according to claim 1, wherein $R^1$ and $R^3$ are both ethyl; and $R^2$, $R^4$, $R^5$ and $R^6$ are hydrogen atoms.

4. The polyester according to any of claims 1 to 3, wherein the number-average molecular weight of the polyester is within a range of 300 to 1,000,000.

5. The polyester according to any of claim 1 to 4, which has a hydroxyl group or a carboxyl group at its end.

6. A method for producing a polyurethane having a structural unit represented by formula (I):

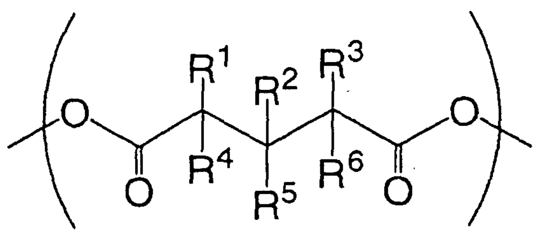

(I)

(wherein $R^1$, $R^2$, $R^3$, $R^4$, $R^5$ and $R^6$ have the same meanings as defined above, respectively), which comprises: allowing a polyester having in the molecule a structural unit represented by formula (I):

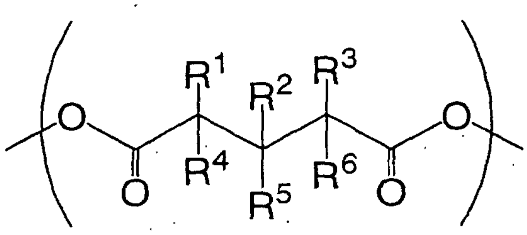

(I)

(wherein $R^1$, $R^2$, $R^3$, $R^4$, $R^5$ and $R^6$ have the same meanings as defined above, respectively), and having at its both ends hydroxyl groups to react with an isocyanate compound at 50 to 150°C.

7. A polyurethane having, in the molecule, a structural unit represented by formula (I):

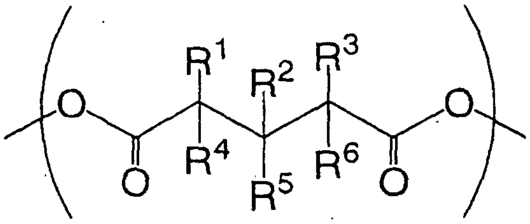

(I)

(wherein $R^1$, $R^2$, $R^3$, $R^4$, $R^5$ and $R^6$ have the same meaning as defined above, respectively).

**8.** The polyurethane according to claim 7, wherein $R^1$ and $R^3$, which are the same or different, are lower alkyl; and $R^2$, $R^4$, $R^5$ and $R^6$ are hydrogen atoms.

**9.** The polyurethane according to claim 7, wherein $R^1$ and $R^3$ are both ethyl, and $R^2$, $R^4$, $R^5$ and $R^6$ are hydrogen atoms.

**10.** The polyurethane according to any of claim 7 to 9, wherein the weight-average molecular weight of the polyurethane is within a range of 10,000 to 3,000,000.

**11.** The polyester according to any of claims 1 to 4, which has a polymerizable double bond at its end.

## INTERNATIONAL SEARCH REPORT

International application No.
PCT/JP03/00874

A. CLASSIFICATION OF SUBJECT MATTER
Int.Cl$^7$ C08G63/16, C08G18/42

According to International Patent Classification (IPC) or to both national classification and IPC

B. FIELDS SEARCHED

Minimum documentation searched (classification system followed by classification symbols)
Int.Cl$^7$ C08G63/00-63/91

Documentation searched other than minimum documentation to the extent that such documents are included in the fields searched

| | | | |
|---|---|---|---|
| Jitsuyo Shinan Koho | 1926-2003 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br><br>A | JP 10-130377 A (Kuraray Co., Ltd.),<br>19 May, 1998 (19.05.98),<br>Column 1, lines 2 to 8; column 4, lines 41 to 43<br>(Family: none) | 1,4-7,10<br><br>2,3,8,9,11 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>24 February, 2003 (24.02.03) | Date of mailing of the international search report<br>11 March, 2003 (11.03.03) |
| Name and mailing address of the ISA/<br>Japanese Patent Office | Authorized officer |
| Facsimile No. | Telephone No. |

Form PCT/ISA/210 (second sheet) (July 1998)